# EUROPÄISCHE PATENTSCHRIFT

(11) **EP 0 521 044 B1**
(45) Veröffentlichungstag und Bekanntmachung des Hinweises auf die Patenterteilung: **24.08.1994**
(21) Anmeldenummer: 91906278.6
(22) Anmeldetag: 13.03.1991
(51) Int. Cl.: C08L 75/04, C08K 5/15, C09K 3/10

(54) **POLYURETHANDICHTUNGSMASSE MIT EPOXIDVERBINDUNGEN**
POLYURETHANE SEALING MATERIALS CONTAINING EPOXIDE COMPOUNDS
MATIERE D'ETANCHEITE EN POLYURETHANE AVEC DES COMPOSES EPOXYDES

(30) Priorität: 21.03.1990 DE 4009095
(43) Veröffentlichungstag der Anmeldung: 07.01.1993
(73) Patentinhaber: Henkel Kommanditgesellschaft auf Aktien, 40191 Düsseldorf (DE)
(72) Erfinder: NEITZER, Klaus, D-4000 Düsseldorf (DE); MAJOLO, Martin, D-5140 Erkelenz (DE); PODOLA, Tore, D-4019 Monheim (DE)
(86) Internationale Anmeldenummer: EP9100469
(87) Internationale Veröffentlichungsnummer: WO9114739

(56) Entgegenhaltungen:
- EP-A- 0 024 501
- EP-A- 0 066 167
- DE-A- 3 221 655
- GB-A- 1 154 611
- US-A- 3 158 586
- US-A- 3 446 780

## Beschreibung

Die Erfindung betrifft UV-Stabilisatoren enthaltende Fugendichtungsmassen auf Basis von Alkoxysilan- und/oder mercapto-terminierten Polyurethanprepolymeren, Füllstoffen und gewünschtenfalls weiteren Hilfsstoffen sowie deren Verwendung.

Auf Polyurethanprepolymere basierende Fugendichtungsmassen sind im Baugewerbe, aber auch im Heimwerkerbereich zu einiger Bedeutung gelangt. Wie der Name schon sagt, werden sie hauptsächlich zum Dichten von Fugen zwischen Bauelementen gleichartigen oder verschiedenen Materials verwendet. So können sie zur Abdichtung von Anschlußfugen zwischen Bauteilen und Werkstoffen beispielsweise aus Beton, Mauerwerk, Asbestzement und Gasbeton, Metall, Holz, Putz und vielen Kunststoffen wie PVC dienen. Auch zur flexiblen Verklebung von Metallen im Schlosser-, Dachdecker- und Installationsbereich und zur Abdichtung von Stößen und Überlappungen werden sie benutzt. Abdichtungen von Blechverwahrungen an Kamin- und Fenstersimsen, Traufblechanschlüssen, an Flachdächern und Balkonen, Verbindungen und Abdichtungen von Dachrinnen und Abläufen sind weitere Beispiele.

Eine bevorzugte Anwendung finden elastische Dichtungsstoffe bei der Herstellung von Gläsern, Scheiben und Fenstern sowie deren Rahmen. In diesem Bereich haben sie sich zur Glasfalzversiegelung, für die Fabrikation von 2-Scheiben- und 3-Scheiben-Isoliergläsern und bei deren Einbau in Rahmen und Fensterwände bewährt. Ein besonderes Einsatzgebiet für Fugendichtungsmassen ist also Scheibenversiegelung im Fensterbau.

Die Dichtungsmassen werden im allgemeinen in Kartuschen abgepackt in den Handel gebracht. Nach der Anwendung härten die aufgebrachten Dichtungsmassen zu elastischen Massen aus. Diese Härtung erfolgt im Regelfall im Rahmen eines Vernetzungsprozesses, der durch Oxidation, Feuchtigkeitsaufnahme oder Polyaddition bewirkt wird. An Fugendichtungsmassen werden hohe technische Anforderungen gestellt. Sie sollen nach der Applikation rasch aushärten, jedoch eine gute Elastizität behalten. Diese Eigenschaften sollen durch Alterung und durch Witterungseinflüsse kaum oder nicht beeinträchtigt werden. Nicht nur aus Gründen der Optik sollen die Oberflächen der ausgehärteten Fugendichtungsmassen weitestgehend kleb- und rißfrei sowie homogen sein.

Dem Fachmann sind Fugendichtungsmassen auf Basis unterschiedlicher Polyurethansysteme bekannt. So lassen sich z.B. 1- und 2-komponentige Systeme unterscheiden. Zu den 1-komponentigen Systemen zählen die feuchtigkeitshärtenden Fugendichtungsmassen. Hierbei sind die Polyurethanprepolymeren mit wasserreaktiven Gruppen terminiert, wie z.B. Isocyanat oder Alkoxysilangruppen. Letztere sind z.B. in der Offenlegungsschrift DE 36 29 237 beschrieben. Feuchtigkeitshärtende Fugendichtungsmassen auf Basis isocyanatterminierter Polyurethanprepolymere sind dem Fachmann z.B. aus der DE 37 26 547 bekannt. 2-komponentige Systeme sind beispielsweise solche mit Mercaptoendgruppen aufweisenden Polyurethanprepolymeren. Ein Verfahren zur Herstellung derartiger Verbindungen und deren Verwendung in Dichtungsmassen ist dem Fachmann unter anderem aus der Offenlegungsschrift DE 36 01 189 bekannt. Darüber hinaus wird in der Offenlegungsschrift DE 32 45 563 ein Verfahren zur Herstellung von (Meth)acrylsäureestergruppen aufweisenden Polyurethanprepolymeren beschrieben sowie deren Verwendung in anaerob härtenden Klebe- und Dichtmassen.

Insbesondere bei der Verwendung im Außenbereich werden besondere Anforderungen an die Witterungsstabilität der genannten Fugendichtungsmassen gestellt. Gerade bei Fugendichtungsmassen auf Basis von Polyurethanprepolymeren kommt der UV-Stabilität eine wichtige Bedeutung zu. Es ist daher üblich, diesen Fugendichtungsmassen sogenannte UV-Stabilisatoren zuzusetzen. Geeignete UV-Stabilisatoren, auch UV-Absorptionsmittel oder UV-Schutzmittel genannt werden z.B. in der Offenlegungsschrift DE 32 21 655 aufgeführt.

Darüber hinaus sind feuchtigkeitshärtende Polyurethan-Dichtungsmassen mit verbesserten Eigenschaften insbesondere verbesserter Langzeitstabilität unter Witterungsbedingungen in der nicht vorveröffentlichten deutschen Anmeldung mit dem Aktenzeichen P 38 43 090.1 beschrieben.

Besondere Bedeutung kommt aber nicht nur der Witterungsbeständigkeit im allgemeinen, sondern insbesondere der dauerhaften Haftung der Fugendichtungsmassen an den Oberflächen unter Witterungsbedingungen zu. Hier bestehen bei den bislang bekannten Polyurethan-Fugendichtungsmassen Defizite. Dies gilt besonders für solche Fälle, bei denen eines der Substrate Glas ist oder eine glasähnliche Oberfläche aufweist. Besonders im Bereich der Scheibenversiegelung läßt das dauerhafte Haftungsvermogen herkömmlicher Fugendichtungsmassen auf Basis von Polyurethanprepolymeren unter Witterungsbedingungen zu wünschen übrig. So beschreibt beispielsweise die EP-A-66 167 oxydativ härtende Dichtungsmassen auf Basis mercapto-terminierter Polyurethanprepolymere zur Abdichtung von Glasscheiben

Überraschenderweise wurde gefunden, daß die witterungsbeständige Haftung auf Glas deutlich verbessert werden kann, wenn den UV-Stabilisatoren enthaltenden Fugendichtungsmassen wirksame Mengen an Epoxidverbindungen beigefügt werden. Bemerkenswert ist, daß sowohl der alleinige Zusatz von UV-Stabilisatoren als auch der alleinige Zusatz von Epoxidverbindungen zu Fugendichtungsmassen auf Basis von Polyurethanprepolymeren die witterungsbeständige Haftung auf Glas verbessert, jedoch bei einer Kombination von UV-Stabilisatoren und Epoxidverbindungen zu einer sprunghaften Verbesserung dieser Eigenschaft führt, so daß von einem synergistischen Effekt gesprochen werden kann.

Aus der Patentliteratur sind zwar Kombinationen von z.B. isocyanat-terminierten Polyurethanprepolymeren mit Epoxidverbindungen wie Glycidylethern z.B. aus der JP 85/217255 bekannt, jedoch findet sich kein Hinweis darauf, daß derartige Systeme speziell als Fugendichtungsmassen eingesetzt werden können. Darüber hinaus ist ein synergistischer Effekt bei der Kombination mit UV-Stabilisatoren bezüglich der verbesserten witterungsbeständigen Haftung auf Glas in der bislang bekannten Literatur nicht vorbeschrieben.

Aufgabe der Erfindung ist es, Fugendichtungsmassen auf Basis von mercaptan und/oder alkoxysilan-terminierten Polyurethanprepolymeren zu realisieren, die eine Verbesserung des Standes der Technik darstellen und insbesondere eine verbesserte witterungsbeständige Haftung der Fugendichtungsmasse auf Glas oder glasähnlichen Oberflächen aufweisen. Dabei sollen die anderen erwünschten positiven Eigenschaften derartiger Fugendichtungsmassen zumindestens nicht übermäßig negativ beeinflußt werden.

Die Aufgabe wurde erfindungsgemäß gelöst durch UV-Stabilisatoren enthaltende Fugendichtungsmassen auf Basis von mercaptan und/oder alkoxysilan-terminierten Polyurethanprepolymeren, Füllstoffen und gewünschtenfalls weiteren Hilfsstoffen, dadurch gekennzeichnet, daß zur Verbesserung einer witterungsbeständigen Haftung auf Glas oder glasähnlichen Oberflächen Epoxidverbindungen enthalten sind.

Aus den bereits genannten Patent- und Offenlegungsschriften sind Fugendichtungsmassen auf Basis von Polyurethanprepolymeren bekannt. Diese können, wie ebenfalls der genannten Literatur zu entnehmen ist, UV-Stabilizatoren, Füllstoffe und/oder weitere Hilfsstoffe enthalten. Die in den erfindungsgemäßen Fugendichtungsmassen enthaltenen, sich zu 100 Gew.-% addierenden Mengen von UV-Stabilisatoren, Polyurethanprepolymeren, Füllstoffen, Hilfsstoffen und Epoxidverbindungen sind bevorzugt so gewählt, daß an Polyurethanprepolymeren etwa 20 Gew.-% bis 75 Gew.-%, an Hilfsstoffen 0 Gew.-% bis 20 Gew.-% und der Rest zu 100 Gew.-% an Füllstoffen, UV-Stabilisatoren und Epoxidverbindungen enthalten sind und der Mindestgehalt an Füllstoffen etwa 20 Gew.-% beträgt. Der Fachmann wird nicht viel weniger als 20 Gew.-% an Polyurethanprepolymeren einsetzen können, da ein zu geringer Anteil an Bindemittel keine geeignete Fugendichtungsmasse ergibt. Auch ist ein viel niedrigerer Gehalt an Füllstoffen als 20 Gew.-% wenig sinnvoll, da die Fugendichtungsmassen dann u.a. nicht die nötige Konsistenz aufweisen. Im allgemeinen wird der Fachmann nicht in diesen grenznahen Gebieten arbeiten. Bevorzugt wird deshalb ein Polyurethanprepolymerengehalt von etwa 30 Gew.-% bis 50 Gew.-% und ein Füllstoffgehalt von etwa 50 Gew.-% bis 70 Gew.-%. Gewünschtenfalls können Hilfsstoffe bis zu ca. 20 Gew.-% enthalten sein.

Polyurethanprepolymere lassen sich herstellen durch Vermischen von Alkoholen der Funktionalität 2 und größer mit Isocyanatverbindungen der Funktionalität 2 und größer. Dabei können durch die Wahl der Einsatzmengen und die Art der genannten Verbindungen die Eigenschaften der Produkte beeinflußt werden. Als Polyolkomponenten können sowohl niedermolekulare als auch hochmolekulare Verbindungen eingesetzt werden. Niedermolekulare Verbindungen, die als Polyolkomponenten für Polyurethanprepolymere verwendet werden können, sind beispielsweise Ethylenglycol, Propylenglycol, Neopentylglycol, 1,4-Butandiol, 1,6-Hexandiol sowie Triole wie Glycerin, Trimethylolpropan oder Trimethylolethan sowie höherfunktionelle Hydroxy-Verbindungen wie Pentaerythrit.

Als höhermolekulare Polyolkomponente werden in der Regel Polyetherpolyole und/oder Polyesterpolyole verwendet. Polyetherpolyole können durch Umsetzung eines Epoxids oder Tetrahydrofurans mit einer niedermolekularen Polyolkomponente dargestellt werden, wobei als Epoxid beispielsweise Ethylenoxid, Propylenoxid, Butylenoxid, Styroloxid, Cyclohexenoxid, Trichlorbutylenoxid und Epichlorhydrin und als Polyol z.B. Verbindungen wie Ethylen-, Diethylen- und Propylenglycol Verwendung finden.

Polyester als Ausgangsstoffe für Polyurethanprepolymere werden üblicherweise durch Umsetzung von Hydroxylverbindungen mit Carbonsäuren dargestellt. Als Hydroxylverbindungen können die bereits genannten niedermolekularen mehrfunktionellen Hydroxylkomponenten eingesetzt werden. Als Säurekomponente sind Verbindungen wie Adipinsäure, Phthalsäure, Oxalsäure, Maleinsäure, Bernsteinsäure, Glutarsäure, Acelainsäure, Sebacinsäure sowie Tricarbonsäuren geeignet. Auch durch ringöffnende Polymerisation von beispielsweise Epsilon-Caprolacton oder Methyl-epsilon-caprolacton lassen sich geeignete Polyester zur Darstellung von Polyurethanprepolymeren gewinnen. Neben Polyestern und Polyethern als Polyolkomponente können aber auch Naturstoffe, sogenannte oleochemische Polyole oder z.B. Rizinusöl eingesetzt werden.

Im Rahmen der Erfindung sind als Polyole Polyetherpolyole bevorzugt, insbesondere solche Polyetherpolyole, die durch Umsetzung von Glycerin zu Propylenoxidaddukten wie Polypropylenglycol dargestellt werden können.

Als Isocyanatkomponente können sowohl aromatische als auch aliphatische und/oder cycloaliphatische Isocyanate Verwendung finden. Geeignete Isocyanate mit einer Funktionalität von 2 und größer sind beispielsweise die Isomeren des Toluylendiisocyanats, Isophorondiisocyanat, Dicyclohexylmethandiisocyanat, Tetramethylendiisocyanat, Trimethylhexamethylendiisocyanat, Trimethylxyloldiisocyanat, Hexamethylendiisocyanat und Diphenylmethandiisocyanat oder auch Triisocyanate wie z.B. 4,4',4''-Triphenylmethantriisocyanat. Im Rahmen der Erfindung sind die aromatischen Diisocyanate, insbesondere technisches Diphenylmethan-4,4'-diisocyanat (MDI) und Toluylendiisocyanat-2,4 (TDI) bevorzugt.

In einer bevorzugten Ausführungsform wird das Polyurethanprepolymere durch Umsetzung eines Glycerin-propylenoxid-adduktes und/oder eines Polypropylenglycols mit technischem Diphenylmethandiisocyanat und/oder technischem Toluylendiisocyanat hergestellt. Wird dabei das Isocyanat im Überschuß eingesetzt, so enthält das gebildete Polyurethanprepolymere reaktive NCO-Gruppen.

Die Standfestigkeit von Fugendichtungsmassen wird in der Regel durch Zusatz von feinteiligen Feststoffen - auch Füllstoffe genannt - erzielt. Diese lassen sich in solche organischer und solche anorganischer Art unterscheiden. Als anorganische Füllstoffe können beispielsweise Kreide - gecoatet oder ungecoatet - und/oder Zeolithe bevorzugt sein. Letztere können zudem auch als Trockenmittel fungieren. Als organischer Füllstoff kommt z.B. PVC-Pulver in Betracht.

Die Füllstoffe tragen im allgemeinen wesentlich dazu bei, daß die Dichtungsmasse nach der Anwendung einen notwendigen inneren Halt besitzt, so daß ein Auslaufen oder Ausbuchten der Dichtungsmasse aus senkrechten Fugen verhindert wird. Die genannten Zusatz- bzw. Füllstoffe lassen sich in Pigmente und thixotropierende Füllstoffe, auch verkürzt als Thixotropiermittel bezeichnet, einteilen. Bei den Fugendichtungsmassen auf der Basis von feuchtigkeitshärtenden Polyurethanprepolymeren müssen an diese Thixotropiermittel zusätzliche Anforderungen gestellt werden. Beispielsweise sollen bei isocyanat-terminierten Prepolymeren unerwünschte Reaktionen mit den Isocyanatgruppen ausgeschlossen sein. Daher kommen als Thixotropiermittel im wesentlichen quellfähige Polymerpulver in Betracht. Beispiele sind hierfür Polyacrylnitril, Polyurethan, Polyvinylchlorid, Polyacrylsäureester, Polyvinylalkohole, Polyvinylacetate sowie die entsprechenden Copolymerisate. Besonders gute Ergebnisse lassen sich mit feinteiligem Polyvinylchloridpulver erhalten.

Die Eigenschaft der Polyurethan-Fugendichtungsmasse läßt sich noch weiter verbessern, wenn dem als Thixotropiermittel verwendeten Kunststoffpulver weitere Komponenten zugesetzt werden. Dabei handelt es sich um Stoffe, die unter die Kategorie der für Kunststoffe angewendeten Weichmacher bzw. Quellmittel und Quellhilfsmittel fallen. Dabei ist es jeweils notwendig, die optimale Zusammensetzung der Systeme Prepolymer/Kunststoffpulver/Weichmacher/Quellhilfsmittel zu bestimmen. So dürfen z.B. Weichmacher und Quellhilfsmittel nicht mit den Isocyanatgruppen des Prepolymer reagieren. Es kommen somit z.B. für Polyvinylchloridpulver als Thixotropiermittel Weichmacher aus der Klasse der Phthalsäureester in Betracht. Beispiele für anwendbare Verbindungen aus dieser Substanzklasse sind Dioctylphthalat, Dibutylphthalat und Benzylbutylphthalat. Weitere Substanzklassen, die die geforderten Eigenschaften erfüllen, sind Chlorparaffine, Alkylsulfonsäureester etwa der Phenole oder Kresole sowie Fettsäureester. Im Rahmen der Erfindung sind insbesondere Weichmacher auf der Basis von Alkylsulfonsäureestern und Polyvinylchlorid als quellfähiges Polymerpulver bevorzugt.

Als Quellhilfsmittel sind solche niedermolekularen organischen Substanzen einsetzbar, die mit dem Polymerpulver und dem Weichmacher mischbar sind, aber nicht mit den reaktiven Endgruppen, beispielsweise Isocyanatgruppen, des Polyurethanprepolymeren reagieren. Derartige Quellhilfsmittel lassen sich den einschlägigen Kunststoff- und Polymer-Handbüchern für den Fachmann entnehmen. Als bevorzugte Quellhilfsmittel für Polyvinylchloridpulver dienen Ester, Ketone, aliphatische Kohlenwasserstoffe, aromatische Kohlenwasserstoffe sowie aromatische Kohlenwasserstoffe mit Alkylsubstituenten. Die letztgenannten, insbesondere das Xylol, werden als bevorzugte Quellhilfsmittel für Polyvinylchloridpulver im Rahmen der Erfindung verwendet.

Als Pigmente und Farbstoffe in der erfindungsgemäßen Fugendichtungsmasse werden die für diese Verwendungszwecke bekannten Substanzen wie Titandioxid, Eisenoxide und Ruß verwendet. Zur Verbesserung der Lagerstabilität werden bekanntermaßen den Fugendichtungsmassen Stabilisatoren wie Benzoylchlorid, Acetylchlorid, Toluolsulfonsäuremethylester, Carbodiimide und/oder Polycarbodiimide zugesetzt. Als besonders gute Stabilisatoren haben sich Olefine mit 8 bis 20 Kohlenstoffatomen erwiesen. Neben der stabilisierenden Wirkung können diese auch Aufgaben von Weichmachern bzw. Quellmitteln erfüllen. Bevorzugt werden Olefine mit 8 bis 18 Kohlenstoffatomen, insbesondere wenn die Doppelbindung in 1,2-Stellung angeordnet ist. Beste Ergebnisse erhält man, wenn die Molekülstruktur dieser Stabilisatoren linear ist.

Epoxidverbindungen sind dem Fachmann außer aus der Patentliteratur auch aus Encyklopädien bekannt. So ist z.B. im Ullmann, Encyklopädie der technischen Chemie, 4. Auflage, Band 10, Verlag Chemie, Weinheim/Bergstraße 1974, Seite 563 ff. ausführlich die Herstellung von Epoxiden, deren Eigenschaften und Verwendung beschrieben. Zu den technisch wichtigsten Epoxidverbindungen zählen Epichlorhydrin und solche auf Basis von Bisphenol A. Im Sinne der Erfindung sind insbesondere flüssige und/oder in zumindest einer der übrigen Komponenten der Fugendichtungsmasse gut lösliche Epoxidverbindungen geeignet. Bevorzugt werden unter sicherheitstechnischen Gesichtspunkten schwer oder nicht flüchtige Epoxidverbindungen. Mehrfunktionelle Epoxidverbindungen sind besonders geeignet. Vorzugsweise liegt die Anzahl der Epoxy-Gruppen pro Molekül im Mittel bei 1,5 bis 3,0.

Hervorragend geeignet sind Glycidylverbindungen wie Glycidester oder Glycidether. Glycidester lassen sich z.B. durch Veresterung von Glycidol, auch 2,3-Epoxy-1-propanol genannt, mit Säuren, z.B. Carbonsäuren erhalten. Im Sinne der Erfindung werden jedoch Glycidether bevorzugt. Insbesondere sind dies solche Verbindungen, die theoretisch oder praktisch Umsetzungsprodukte von Epichlorhydrin mit OH-funktionellen Substanzen darstellen. Bei diesen sind sowohl die phenolischen Verbindungen als auch die Alkohole geeignet. Unter den besonders geeigneten, mehrfunktionellen phenolischen Verbindungen ist das Bisphenol A, auch als 2,2-Bis(4-hydroxyphenyl)propan bezeichnet, bevorzugt. Von den Alkoholen sind insbesondere die niedermolekularen mehrfunktionellen Alkohole mit 2 bis 6 C-Atomen bevorzugt. Besonders gut geeignet sind Pentaerythrit und Dimethylolpropan. Im Sinne der Erfindung vorzugsweise enthaltene Epoxidverbindungen sind also beispiellweise Trimethylolpropan, Triglycidylether, Diglycidylether auf Basis Bisphenol A und/oder Pentaerythritdiglycidylether.

Die letztgenannte Substanz ist kommerziell erhältlich und dem Fachmann z.B. als Hauptbestandteil von Gießharzen mit und ohne Füllstoff in der Elektroindustrie für die Einbettung und Ummantelung von Elektrobauteilen bekannt. Wie die meisten Epoxidverbindungen zeichnet sie sich durch eine hohe Reaktionsfähigkeit gegenüber Verbindungen aus, die Amino-, Hydroxyl- und/oder Carboxyl- bzw. Anhydridgruppen enthalten. Mit organischen Polyaminen können diese Substanzen bereits bei Raumtemperatur und mit Dicarbonsäureanhydriden, Phenolharzen, Harnstoff und Melaminharzen bei höherer Temperatur gehärtet werden. Auf derartige Härter und/oder Beschleuniger für Epoxidverbindungen kann jedoch bei der vorliegenden Erfindung verzichtet werden. Vielmehr hat es sich in Bezug auf eine witterungsbeständige Haftung auf Glas oder glasähnlichen Oberflächen als günstig erwiesen, wenn Epoxidverbindungen zu einem untergeordneten Anteil in der fugendichtungsmasse enthalten sind, der eigentliche Härtungsprozeß jedoch zumindest überwiegend durch Verknüpfung der Polyurethanprepolymeren miteinander vonstatten geht.

Es werden daher bevorzugt dicht mehr als 15 Gew.-% Epoxidverbindung, bezogen auf Polyurethanprepolymere, in den erfindungsgemäßen Fugendichtungsmassen enthalten sein. Um eine ausreichende Verbesserung der witterungsbeständigen Haftung auf Glas zu erreichen, wird der Fachmann nicht weniger als 1 Gew.-% Epoxidverbindungen zusetzen. Ein bevorzugter Bereich liegt zwischen 3 bis 8 Gew.-%, in welchem optimale Ergebnisse zu erzielen sind.

Geeignete UV-Stabilisatoren sind beispielsweise aus der genannten DE 32 21 655 bekannt und/oder kommerziell erhältlich. Von Bedeutung sind insbesondere Vertreter der Benzophenone, der Benztrialzole sowie der sterisch gehinderten Amine. Im Hinblick auf die erfindungsgemäße Aufgabe ergeben sich besonders gute Ergebnisse bei einem bevorzugten Verhältnis von Epoxidverbindung zu UV-Stabilisatoren in einem Bereich von 3 : 1 bis 1 : 2. Insbesondere in einem Bereich von 2 : 1 bis 1 : 1 werden besonders gute Ergebnisse erzielt.

Es hat sich jedoch erwiesen, daß nicht alle UV-Stabilisatoren gleichermaßen geeignet sind. Beispielsweise lassen sich mit Benzophenonen oder Trisnonylphosphid weniger gute Ergebnisse erzielen. Auch bei Kombinationen von UV-Stabilisatoren gibt es Unterschiede hinsichtlich der Wirksamkeit. Als hervorragend geeignet haben sich Kombinationen von Benztriazolen mit sterisch gehinderten Aminen erwiesen, insbesondere wenn diese in einem Verhältnis zueinander von 2 : 1 bis 1 : 2 eingesetzt werden. Bevorzugt werden etwa gleichgroße Mengenanteile an Benztriazolen und sterisch gehinderten Aminen. Mit den obengenannten Verhältnissen sind jeweils Mengenverhältnisse gemeint. Als Benztriazole kommen insbesondere 2-(2-Hydroxy-5-methylphenyl)-2H-benztriazol sowie 2-(2-Hydroxy-3,5-di-tertiär-amyl-phenyl)-2H-benztriazol in Betracht. Von den geeigneten sterisch gehinderten Aminen sind beispielhaft das besonders geeignete Bis(2,2,6,6-tetramethyl-4-piperidyl)sebazat genannt. Geeignete sterisch gehinderte Amine sind dem Fachmann auch unter der Abkürzung "HALS" bekannt.

Im Sinne der Erfindung geeignete Polyurethanprepolymere mit den bereits vorstehend beschriebenen molekularen Grundgerüsten enthalten verschiedene reaktive Endgruppen. Durch diese Endgruppen wird im wesentlichen der Härtungsprozeß der Fugendichtungsmassen bestimmt. Die Polyurethanprepolymere enthalten als reaktive endständige funktionelle Gruppen Mercaptan- und/oder Alkoxysilangruppen. Bei der Herstellung geeigneter mercaptan- oder alkoxysilanterminierter Polyurethane kann von entsprechenden isocyanatterminierten Polyurethanen ausgegangen werden.

Geeignete isocyanatterminierte Polyurethanprepolymere lassen sich relativ einfach herstellen. In aller Regel ist es dabei nur notwendig, bei der bereits geschilderten Herstellung der Polyurethanprepolymeren aus mehrfunktionellen Isocyanaten die Isocyanatkomponente im stöchiometrischen Überschuß einzusetzen. Es werden so Polyurethanprepolymere mit reaktiven NCO-Gruppen gebildet. Isocyanatterminierte Polyurethanprepolymere werden vorzugsweise in feuchtigkeitshärtenden 1-komponentigen Fugendichtungsmassen eingesetzt wie z.B. in der bereits genannten DE 37 26 547 beschrieben.

Alkoxysilanterminierte Polyurethane finden vorzugsweise Verwendung in 1-komponentigen feuchtigkeitshärtenden Fugendichtungsmassen. Polyurethanprepolymere mit reaktiven Alkoxysilangruppen lassen sich z.B. ausgehend von reaktiven isocyanatgruppenhaltigen Polyurethanprepolymeren herstellen. Diese Polyurethanprepolymeren werden mit NCO-Gruppen-reaktiven Alkoxysilanen umgesetzt, was zu dem gewünschten alkoxysilangruppenhaltigen Polyurethanprepolymeren führt. Werden Prepolymere mit endständigen Isocyanatgruppen eingesetzt, so versteht es sich von selbst, daß auch in den Umsetzungprodukten die nunmehr eingeführte Alkoxysilangruppe terminal angeordnet ist. Geeignete terminale Alkoxysilangruppen enthaltende Polyurethane sowie deren Herstellung sind z.B. in der bereits genannten DE 36 29 237 sowie in der Offenlegungsschrift DE 25 51 275 beschrieben.

Auch mercaptogruppenhaltige Polyurethanprepolymere lassen sich aus den entsprechenden Isocyanatprepolymeren herstellen. Dazu werden diese z.B. mit Mercaptoalkoholen zur Reaktion gebracht. So lassen sich beispielsweise aus NCO-terminierten Polyurethanprepolymeren entsprechende SH-terminierte Prepolymere herstellen. Diese lassen sich bevorzugt in oxidativ härtenden 2-komponentigen Dichtungsmassen einsetzen. Näheres dazu findet der Fachmann z.B. in der bereits genannten DE 36 01 189.

Liegt eine solche 2-komponentige mercaptogruppenhaltige Polyurethan-Fugendichtungsmasse vor, so ist bevorzugt, daß die Epoxidverbindung in der Härterkomponente enthalten ist. 2-Komponenten-Systeme unterteilt der Fachmann in eine sogenannte Prepolymeren- oder auch Harzkomponente und eine sogenannte Härterkomponente. Die erstgenannte Komponente enthält dabei zum zumindest überwiegenden Teil die zur weiteren Polymerisation fähigen Prepolymeren. Der Begriff Härterkomponente erklärt sich von selbst. Beispielsweise ist bei Fugendichtungsmassen auf Basis von SH-terminierten Polyurethanprepolymeren ein oxidischer Härter wie Mangandioxid in der Härterkomponente enthalten. Bevorzugt liegt also der Härter in Abmischung mit Epoxidverbindungen in der Härterkomponente vor.

Im allgemeinen sind in den Fugendichtungsmassen weitere Hilfsstoffe enthalten. Bevorzugterweise sind dies Katalysatoren, Weichmacher, Lösemittel und/oder andere dem Fachmann für Fugendichtungsmassen als solche bekannte Hilfsstoffe. Katalysatoren können z.B. Zinnverbindungen wie Dibutylzinndilaurat oder Dibutylzinnacetylacetonat sein. Von den Weichmachern sind Phthalat-Weichmacher wie Benzylbutylphthalat geeignet. Bei den SH-gruppenhaltigen Prepolymeren können Mercaptosilane als Haftvermittler und/oder Thiuramsulfide als Beschleuniger eingesetzt werden. Als Vernetzungsmittel sind Ketoximosilane bei silangruppenhaltigen Prepolymeren bekannt. Die Hilfsstoffe, dies gilt insbesondere für die Katalysatoren, können entsprechend der unterschiedlichen chemischen Modifikation der erfindungsgemäß geeigneten Polyurethanprepolymeren, unterschiedlich geeignet sein. Dem Fachmann ist jedoch auch dies bekannt. Jeweils geeignete Hilfsstoffe lassen sich auch den bereits vorstehend genannten Patent- und Offenlegungsschriften entnehmen.

Die erfindungsgemäßen Fugendichtungsmassen werden bevorzugt zur Scheibenversiegelung im Fensterbau verwendet. Unter Scheibenversiegelung versteht der Fachmann die Abdichtung des Fensterrahmens zum Glas. Eine in Deutschland wichtige Norm, die die Anforderungen an derartige Dichtstoffe beschreibt, ist die DIN 18545 mit den entsprechenden Ausführungsformen. Ein wesentliches Prüfkriterium ist der sogenannte "Haft- und Dehnversuch nach Lichteinwirkung", wie er in der DIN 52455 beschrieben ist. Die vorstehend beschriebenen erfindungsgemäßen Dichtungsmassen sind nach diesen Prüfkriterien hervorragend für die Scheibenversiegelung geeignet, insbesondere was die dauerhafte Haftfestigkeit auf Glas betrifft. Sie erschließen sich damit ein Anwendungsfeld, das bislang im wesentlichen den weniger ökonomischen Fugendichtungsmassen auf Basis Silikon oder Polysulfid vorbehalten blieb.

Die Erfindung wird durch die nachstehenden Beispiele näher ausgeführt.

### Beispiele

### Beispiel 1

Fugendichtungsmasse auf Basis SH-terminierter Polyurethanprepolymerer (PUR):

| Komponente A | A1 | A2 |
|---|---|---|
| 1. SH-term. PUR | 32,0 | 32,0 |
| 2. Benztriazol | 1,0 | - |
| 3. HALS | 1,0 | - |
| 4. Zinn-Katalysator | 0,1 | 0,1 |
| 5 Phthalat-Weichmacher | 10,0 | 10,0 |
| 6. Kreide | 54,9 | 56,9 |
| 7. Titandioxid | 0,5 | 0,5 |
| 8. Haftvermittler | 0,5 | 0,5 |
| | 100,0 | 100,0 |

| Komponente B (Härter) | B1 | B2 |
|---|---|---|
| 1. Mangandioxid (Härter) | 35,0 | 35,0 |
| 2. Phthalat-Weichmacher | 20,0 | 45,0 |
| 3. Pentaaerythritdiglycidylether | 25,0 | - |
| 4. Kreide | 13,0 | 13,0 |
| 5. Ruß | 5,0 | 5,0 |
| 6. Beschleuniger | 2,0 | 2,0 |
| | 100,0 | 100,0 |

Alle Angaben in Gew.-%
Mischungsverhältnis A : B = 1 : 0,10

### Beispiel 2

Fugendichtungsmasse auf Basis siloxanterminierter Polyurethanprepolymere (PUR), einkomponentig

| | B1 | B2 | B3 |
|---|---|---|---|
| 1. Siloxan-term. PUR | 40,0 | 40,0 | 40,0 |
| 2. Kreide | 45,5 | 43,5 | 41,0 |
| 3. Titandioxid | 5,0 | 5,0 | 5,0 |
| 4. Lösemittel | 7,0 | 7,0 | 7,0 |
| 5. Vernetzer | 2,0 | 2,0 | 2,0 |
| 6. Zinn-Katalysator | 0,5 | 0,5 | 0,5 |
| 7. HALS | - | 1,0 | 1,0 |
| 8. Benztriazol | - | 1,0 | 1,0 |
| 9. Pentaerythritdigycidylether | - | - | 2,5 |
| | 100,0 | 100,0 | 100,0 |

Alle Angaben in Gew.-%

### Meßergebnisse

Die Probekörperherstellung erfolgt nach DIN 18545, bzw. nach DIN 52455, Blatt 1.

### zu Beispiel 1

Die Vorlagerung der Probekörper wurde wie folgt durchgeführt:
- 7 Tage Normalklima, 23 °C, 50 % rel. Feuchte
- 1 Tag Trockenschrank, 50 °C
- 7 Tage UV/Wasser-Lagerung entsprechend DIN 52455, Blatt 3

| Haftzugprüfung | | | |
|---|---|---|---|
| Haftung auf Glas | nicht erfindungsgemäß | | erfindungsgemäß |
| Komponente A | A1 | A2 | A1 |
| Komponente B | B2 | B1 | B1 |
| Bruchkraft | 0,13 | 0,46 | 1,0 N/mm² |
| Bruchdehnung | 22 | 32 | 133 % |

### Zu Beispiel 2

- 7 Tage Normalklima, 23 °C, 50 % rel. Feuchte
- 7 Tage Trockenschrank, 50 °C
- 7 Tage UV/Wasser-Lagerung entsprechend DIN 52455, Blatt 3

| Haftzugprüfung | | | |
|---|---|---|---|
| Haftung auf Glas | nicht erfindungsgemäß | | erfindungsgemäß |
| | B1 | B2 | B3 |
| Bruchkraft | 0,25 | 0,36 | 0,63 N/mm² |
| Bruchdehnung | 57 | 129 | 203 % |

Die Ergebnisse der Haftzugprüfung aus den Beispielen 1 und 2 zeigen die verbesserte Wirkung der erfindungsgemäßen Dichtungsmassen.

## Patentansprüche

1. UV-Stabilisatoren enthaltende 1- oder 2-komponentige Fugendichtungsmassen auf Basis von
- Polyurethanprepolymeren mit Mercaptan- und/oder Alkoxysilanendgruppen und
- Füllstoffen:
dadurch gekennzeichnet, daß zur Verbesserung einer witterungsbeständigen Haftung auf Glas oder glasähnlichen Oberflächen Epoxidverbindungen enthalten sind.

2. Fugendichtungsmassen nach Anspruch 1, dadurch gekennzeichnet, daß die sich zu 100 Gew.-% addierenden Mengen von UV-Stabilisatoren, Polyurethanprepolymeren, Füllstoffen, Hilfsstoffen und Epoxidverbindungen so gewählt sind, daß an Polyurethanprepolymeren etwa 20 bis 75 Gew.-%, an Hilfsstoffen 0 bis 20 Gew.-% und der Rest zu 100 Gew.-% an Füllstoffen, UV-Stabilisatoren und Epoxidverbindungen enthalten sind und der Mindestgehalt an Füllstoffen etwa 20 Gew.-% beträgt.

3. Fugendichtungsmassen nach einem der vorstehenden Ansprüche, dadurch gekennzeichnet, daß 1 bis 15 Gew.-%, insbesondere 3 bis 8 Gew.-%, Epoxidverbindungen bezogen auf Prepolymere enthalten sind.

4. Fugendichtungsmassen nach einem der vorstehenden Ansprüche, dadurch gekennzeichnet, daß die Epoxidverbindungen mehrere Epoxidgruppen, bevorzugt im Mittel 1,5 bis 3,0, aufweisen.

5. Fugendichtungsmassen nach einem der vorstehenden Ansprüche, dadurch gekennzeichnet, daß als Epoxidverbindung Glycidylverbindungen, bevorzugt Glycidether, enthalten sind.

6. Fugendichtungsmassen nach einem der vorstehenden Ansprüche, dadurch gekennzeichnet, daß als Glycidylverbindungen Umsetzungsprodukte von
- Epichlorhydrin mit
- mehrfunktionellen phenolischen Verbindungen, insbesondere Bisphenol-A, und/oder niedermolekularen mehrfunktionellen Alkoholen mit 2 bis 6 C-Atomen, insbesondere Pentaerythrit und/oder Trimethylolpropan,
enthalten sind.

7. Fugendichtungsmassen nach einem der vorstehenden Ansprüche, dadurch gekennzeichnet, daß Epoxidverbindungen und UV-Stabilisatoren in einem Verhältnis von 3 : 1 bis 1 : 2, vorzugsweise in einem Verhältnis von 2 : 1 bis 1 : 1, enthalten sind.

8. Fugendichtungsmassen nach einem der vorstehenden Ansprüche, dadurch gekennzeichnet, daß als UV-Stabilisatoren Benztriazole und sterisch gehinderte Amine, vorzugsweise in einem Verhältnis zueinander von 2 : 1 bis 1 : 2, bevorzugt etwa 1 : 1, enthalten sind.

9. Fugendichtungsmassen nach einem der vorstehenden Ansprüche, dadurch gekennzeichnet, daß sie als Füllstoffe Kreide, Zeolithe, oxid, Ruß, Eisenoxid und/oder feinteilige organische Polymere wie Polyacrylnitril und Polyvinylchlorid enthalten.

10. Fugendichtungsmassen nach einem der vorstehenden Ansprüche, dadurch gekennzeichnet, daß sie als Hilfsstoffe Katalysatoren, Weichmacher, Lösemittel und/oder andere bekannte Hilfsstoffe enthalten.

11. Fugendichtungsmassen nach einem der vorstehenden Ansprüche, dadurch gekennzeichnet, daß bei 2-Komponenten-Systemen auf Basis mercaptogruppenhaltiger Polyurethanprepolymerer die Epoxidverbindung in der Härter-Komponente enthalten ist.

12. Verwendung der Fugendichtungsmassen nach einem der vorstehenden Ansprüche zur Scheibenversiegelung im Fensterbau.

13. Fugendichtungsmasse nach Anspruch 1, gekennzeichnet durch weitere Hilfsstoffe.

## Claims

1. UV-stabilized one- or two-componentjoint sealants based on
- mercaptan- and/or alkoxysilane-terminated polyurethane prepolymers and
- fillers,
characterized in that they contain epoxy compounds to improve weather-resistant adhesion to glass or glass-like surfaces.

2. Joint sealants as claimed in claim 1, characterized in that the quantities of UV stabilizers, polyurethane prepolymers, fillers, auxiliaries and epoxy compounds, which add up to 100% by weight, are selected so that the joint sealants contain approximately 20 to 75% by weight polyurethane prepolymers, 0 to 20% by weight auxiliaries and, as the balance to 100% by weight, fillers, UV stabilizers and epoxy compounds, the minimum filler content being approximately 20% by weight.

3. Joint sealants as claimed in any of the preceding claims, characterized in that they contain 1 to 15% by weight and, more particularly, 3 to 8% by weight epoxy compounds, based on prepolymers.

4. Joint sealants as claimed in any of the preceding claims, characterized in that the epoxy compounds contain several epoxy groups, preferably on average 1.5 to 3.0.

5. Joint sealants as claimed in any of the preceding claims, characterized in that glycidyl compounds, preferably glycidyl ethers, are present as the epoxy compound.

6. Joint sealants as claimed in any of the preceding claims, characterized in that the glycidyl compounds present are reaction products of
- epichlorohydrin with
- polyfunctional phenolic compounds, more particularly bisphenol A, and/or low molecular weight polyfunctional alcohols containing 2 to 6 carbon atoms, more particularly pentaerythritol and/or trimethylol propane.

7. Joint sealants as claimed in any of the preceding claims, characterized in that epoxy compounds and UV stabilizers are present in a ratio of 3:1 to 1:2 and preferably in a ratio of 2:1 to 1:1.

8. Joint sealants as claimed in any of the preceding claims, characterized in that they contain benztriazoles and sterically hindered amines, preferably in a ratio to one another of 2:1 to 1:2 and, more preferably, approximately 1:1, as UV stabilizers.

9. Joint sealants as claimed in any of the preceding claims, characterized in that they contain chalk, zeolites, carbon black, iron oxide and/or fine-particle organic polymers, such as polyacrylonitrile and polyvinyl chloride, as fillers.

10. Joint sealants as claimed in any of the preceding claims, characterized in that they contain catalysts, plasticizers, solvents and/or other known additives as auxiliaries.

11. Joint sealants as claimed in any of the preceding claims, characterized in that, in two-component systems based on mercaptofunctional polyurethane prepolymers, the epoxy compound is present in the curing component.

12. The use of the joint sealants claimed in any of the preceding claims for pane sealing in window manufacture.

13. A joint sealant as claimed in claim 1, characterized by other auxiliaries.

## Revendications

1. Matériaux d'étanchéité de jointoiement à un ou à deux composants à base de :
- prépolymères de polyuréthanne ayant des groupes terminaux mercaptan et/ou alcoxysilane et,
- des substances de remplissage,
caractérisés en ce que pour l'amélioration de l'adhérence résistante aux intempéries sur le verre ou sur des surfaces semblables au verre, des composés époxydiques sont inclus.

2. Matériaux d'étanchéité de jointoiement selon la revendication 1, caractérisés en ce que les quantités que l'on doit ajouter pour 100 % en poids d'agent stabilisants aux UV, de prépolymères de polyuréthanne, de substances de charge, de substances auxiliaires et de composés époxydiques, sont choisies de sorte qu'environ 20 à 75 % en poids de prépolymères de polyuréthanne, 0 à 20 % en poids de substances auxiliaires et le reste à 100 % en poids de substances de remplissage, de stabilisants aux UV et de composés époxydiques, sont contenus et que la teneur minimale en substances de remplissage s'élève à environ 20 % en poids.

3. Matériaux d'étanchéité de jointoiement selon l'une des revendications précédentes, caractérisés en ce que 1 à 15 % en poids, en particulier 3 à 8 % en poids, de composés époxydiques rapporté aux prépolymères, sont inclus.

4. Matériaux d'étanchéité de jointoiement selon l'une des revendications précédentes, caractérisés en ce que les composés époxydiques possèdent plusieurs groupes époxy, de préférence en moyenne 1,5 à 3,0.

5. Matériaux d'étanchéité de jointoiement selon l'une des revendications précédentes, caractérisés en ce que comme composé époxydique, des composés glycidiques, de préférence un éther glycidique, sont inclus.

6. Matériaux d'étanchéité de joint selon l'une des revendications précédentes, caractérisés en ce que comme composés glycidiques des produits de réaction de
- l'épichlorhydrine avec des composés phénoliques plurifonctionnels, en particulier du bisphénol A et/ou des alcools plurifonctionnels de bas poids moléculaire ayant de 2 à 6 atomes de carbone, en particulier du pentaérythritol et/ou du triméthylolpropane sont inclus.

7. Matériaux d'étanchéité de jointoiement selon l'une des revendications précédentes, caractérisés en ce que les composés époxydiques et les agents stabilisants aux UV sont inclus dans un rapport allant de 3:1 à 1:2, de préférence dans un rapport de 2:1 à 1:1.

8. Matériaux d'étanchéité de jointoiement selon l'une des revendications précédentes, caractérisés en ce que comme agents stabilisants aux UV, des benzotriazoles et des amines empêchées stériquement, de préférence dans un rapport, l'un par rapport à l'autre, de 2:1 à 1:2, de préférence environ 1:1, sont inclus.

9. Matériaux d'étanchéité de jointoiement selon l'une des revendications précédentes, caractérisés en ce qu'ils renferment comme substances de remplissage, de la craie, des zéolites, de noir de carbone, de l'oxyde de fer et/ou des polymères organiques finement divisés comme le polyacrylonitrile, et le chlorure de polyvinyle.

10. Matériaux d'étanchéité de jointoiement selon l'une des revendications précédentes, caractérisés en ce qu'ils renferment comme substances auxiliaires des catalyseurs, des agents plastifiants, des solvants, et/ou d'autres agents auxiliaires connus.

11. Matériaux d'étanchéité de jointoiement selon l'une des revendications précédentes, caractérisés en ce que dans les systèmes à deux composants à base de prépolymères de polyuréthanne contenant des groupes mercaptan, le composé époxydique est contenu dans le composant durcisseur.

12. Utilisation des matériaux d'étanchéité de jointoiement selon l'une des revendications précédentes, pour le scellement des vitres dans la construction des fenêtres.

13. Matériau d'étanchéité de joint selon la revendication 1, caractérisé par des substances auxiliaires supplémentaires.
